# EUROPEAN PATENT SPECIFICATION

(11) **EP 3 541 037 B1**
(45) Date of publication and mention of the grant of the patent: **21.07.2021**
(21) Application number: 17887203.2
(22) Date of filing: 27.04.2017
(51) Int. Cl.: H04L 29/06

(54) **REGISTRATION METHOD FOR VIRTUAL OPTICAL NETWORK UNIT, SYSTEM AND STORAGE MEDIUM**
REGISTRIERUNGSVERFAHREN FÜR VIRTUELLE OPTISCHE NETZWERKEINHEIT, SYSTEM UND SPEICHERMEDIUM
PROCÉDÉ D'ENREGISTREMENT POUR UNITÉ DE RÉSEAU OPTIQUE VIRTUELLE, SYSTÈME ET SUPPORT DE STOCKAGE

(30) Priority: 30.12.2016 CN 201611270669
(43) Date of publication of application: 18.09.2019
(73) Proprietor: Sanechips Technology Co., Ltd., Shenzhen, Guangdong 518055 (CN)
(72) Inventor: LONG, Guangping, Shenzhen Guangdong 518055 (CN)
(74) Representative: D'Halleweyn, Nele Veerle Trees Gertrudis
(86) International application number: PCT/CN2017/082273
(87) International publication number: WO 2018/120547

(56) References cited:
- WO-A1-2008/117035
- WO-A1-2011/035602
- WO-A2-2006/012368
- CN-A- 101 674 501
- CN-A- 103 024 611
- CN-A- 104 467 951
- CN-A- 104 467 951
- JP-A- 2009 272 787
- US-A1- 2005 047 782

## Description

### Technical Field

The present invention relates to chip data communication technology, and particularly to a registration method and system for a virtual optical network unit, and a storage medium.

### Background

With the development of network technology, the transmission of services such as voice, data and video requires more bandwidth. Gigabit Passive Optical Network (GPON) came into being under this demand. GPON system is composed of an Optical Line Terminal (OLT) at a network side, an Optical Network Unit (ONU) at a user side and an Optical Distribution Network (ODN). Generally, a point-to-multipoint network structure is adopted, herein, the ODN is composed of passive optical components such as single-mode optical fibers, optical splitters, optical connectors, and the ODN provides optical transmission medium for a physical connection between the OLT and the ONUs.

In the GPON system, broadcasting is adopted in the downstream direction (i.e. the direction from OLT to ONU), and each ONU can receive all downstream frames. However, it is necessary to obtain its own downstream frames according to ONU- IDentification (ONU-ID), GPON Encapsulation Mode-Port ID (GEM-Port ID) and Allocation-ID in the downstream frames. On the other hand, in the upstream direction (i.e., the direction from ONU to OLT), each ONU needs to transmit upstream data in a time slot arranged by OLT for the ONU because each ONU needs to share the transmission medium. The upstream frame adopts Time Division Multiple Access (TDMA) technology is adopted for upstream frames, with that technology, the upstream channel is divided into multiple time slots, OLT allocates upstream bandwidth to ONU, and ONU transmits data within the upstream bandwidth allocated by OLT to the ONU.

For safety reasons, the OLT needs to authenticate the legitimacy of the ONU before the ONU accesses the OLT. In related art, the OLT verifies the legitimacy of the ONU by verifying the legitimacy of the ONU based on the Serial Number (SN) of the ONU and rejects the access of the illegal ONU.

In the process of implementing the present invention, the inventor discovers the following disadvantages in the related art: in an existing GPON system, an ONU may provide services for a user terminal or multiple user terminals at the same time. When an ONU provides services for multiple user terminals, the multiple user terminals share a total bandwidth, the bandwidth sharing among users has a competitive relationship, the user experience is poor; and it is not conducive to management and maintenance of ONU products.

Document WO 2011/035602 A1 discloses a method for implementing the registration flow of a Gigabit-Capable Passive Optical Network (GPON). The method comprises defining a frame format of a registration identifier request message and a frame format of a registration identifier response message, and sending, by an optical line terminal, a serial number request message. After receiving the serial number request message, the newly online optical network unit sends a serial number response message to the optical line terminal, where the serial number response message carries a serial number of the newly online optical network unit. After receiving the sequence number response message, the optical line terminal parses out the sequence number therein and determines whether the mapping relationship between the sequence number and the optical network unit identifier is preconfigured locally. If yes, registration is performed according to the sequence number method. Otherwise, the frame format of the request message with the defined registration identifier and the frame format of the registration identifier response message are registered according to the registration identifier.

### Summary

The invention is defined by the claims. In order to solve the existing problems, embodiments of the present invention intend to provide a registration method according to claim 1 and system according to claim 4 for a virtual ONU and a computer storage medium according claim 7, by which an ONU can provide independent bandwidth services and independent maintenance management for multiple user terminals simultaneously and the user terminals do not affect each other. Further improvements and embodiments are provided in the dependent claims.

Also provided is a registration method for a virtual ONU, the method includes:
receiving, by N virtual ONUs in a serial number (SN) state, an SN request sent by an optical line terminal (OLT); herein, N is a natural number greater than or equal to 2;
sending, by each virtual ONU, an SN response to the OLT; and
registering, by the OLT, each virtual ONU according to each SN response.

In the above embodiment, sending, by each virtual ONU, the SN response to the OLT, includes:
calculating, by each virtual ONU, a sending time corresponding to each SN response;
sending, by each virtual ONU, the SN response to the OLT according to the sending time corresponding to each SN response.

In the above embodiment, each virtual ONU calculates the sending time corresponding to each SN response according to the following formula:
a sending time corresponding to an i-th SN response = a start time + a response time + a random delay + a preset time interval × i; herein i is a natural number greater than or equal to 0 and less than or equal to N-1.

In the above embodiment, registering, by the OLT, each virtual ONU according to each SN response, includes:
selecting an SN response from all SN responses as a current SN response when all SN responses are not empty;
registering, by the OLT, a current virtual ONU corresponding to the current SN response according to the current SN response.

In the above embodiment, registering, by the OLT, the current virtual ONU corresponding to the current SN response according to the current SN response, includes:
judging, by the OLT, whether the current virtual ONU is legal according to the current SN response;
sending, by the OLT, a unique current ONU identification to the current virtual ONU when the current virtual ONU is legal;
entering, by the current virtual ONU, a ranging state after receiving the current ONU identification; and entering a working state after receiving an equalization delay sent by the OLT; herein the registration of the current virtual ONU is activated successfully.

Also provided is a registration system for a virtual ONU, the system includes an OLT and N virtual ONUs.

The OLT is configured to send an SN request to N virtual ONUs in an SN state; herein N is a natural number greater than or equal to 2.

The virtual ONU is configured to send an SN response to the OLT.

The OLT is further configured to register each virtual ONU according to each SN response.

In the above embodiment, the virtual ONU is configured to calculate a sending time corresponding to the SN response; and send the SN response to the OLT according to the sending time corresponding to the SN response.

In the above embodiment, the virtual ONU is configured to calculate the sending time corresponding to the SN response according to the following formula:
a sending time corresponding to an i-th SN response = a start time + a response time + a random delay + a preset time interval × i; herein i is a natural number greater than or equal to 0 and less than or equal to N-1.

In the above embodiment, the OLT includes a selection unit and a registration unit; herein, the selection unit is configured to select an SN response from all SN responses as a current SN response when all SN responses are not empty; the registration unit is configured to register the current virtual ONU corresponding to the current SN response according to the current SN response.

In the above embodiment, the registration unit is configured to judge whether the current virtual ONU is legal according to the current SN response; send a unique current ONU identification to the current virtual ONU when the current virtual ONU is legal; and send an equalization delay to a current virtual ONU in a ranging state.

Correspondingly, also provided is a computer storage medium, storing a computer program, herein, the computer program is used to execute the registration method for a virtual ONU in an embodiment of the present invention.

Thus, in the solution of an embodiment of the present invention, the N virtual ONUs in the serial number state first receive the SN request sent by the optical line terminal OLT, then each virtual ONU sends the SN response to the OLT, and finally the OLT registers each virtual ONU according to each SN response. That is, the OLT may register multiple virtual ONUs according to SN responses sent by the multiple virtual ONUs. However, in the existing art, when an ONU provides services for multiple user terminals, the multiple user terminals share a total bandwidth, the bandwidth sharing among users has a competitive relationship, and the user experience is poor. Therefore, compared with the existing art, with the registration method and system for the virtual ONU and the storage medium provided by embodiments of the present invention, an ONU can provide independent bandwidth services and independent maintenance management for multiple user terminals simultaneously; the multiple the user terminals do not affect each other. In addition, the solution of an embodiment of the present invention is simple and convenient to realize, convenient to popularize and has a wide application range.

### Brief Description of Drawings

FIG. 1 is a flowchart of implementation of a registration method for a virtual ONU in an embodiment of the present invention.
FIG. 2 is a flowchart of an implementation method for sending, by each virtual ONU, an SN response to the OLT in an embodiment of the present invention.
FIG. 3 is a flowchart of an implementation method for registering, by an OLT, each virtual ONU according to each SN response in an embodiment of the present invention.
FIG. 4 is a diagram of a first composition structure of a registration system for a virtual ONU in an embodiment of the present invention.
FIG. 5 is a diagram of a second composition structure of a registration system for a virtual ONU in an embodiment of the present invention.

### Detailed Description

The present invention will be described below in detail with reference to the drawings in combination with the embodiments. It needs to be stated that embodiments in the present application and features in the embodiments may be mutually combined under a situation of no conflict.

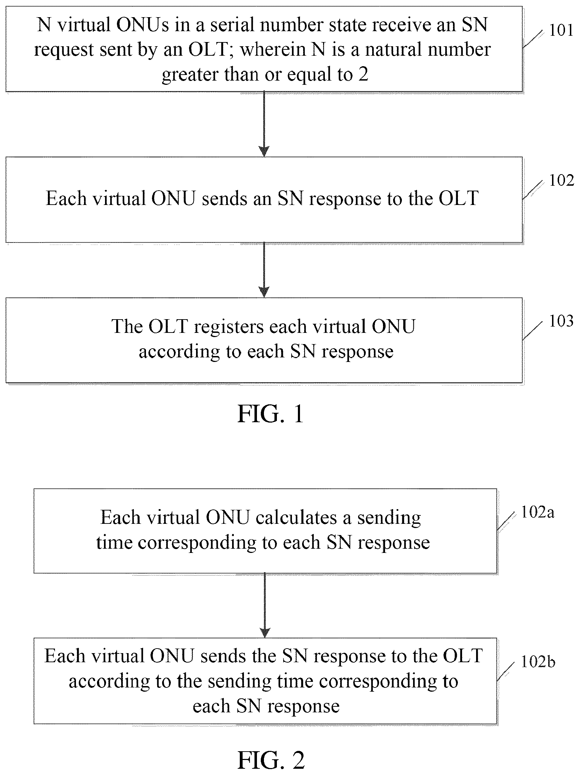

FIG. 1 is a flowchart of implementation of a registration method for a virtual ONU in an embodiment of the present invention.

As shown in FIG. 1, the registration method for the virtual ONU may include the following steps 101-103.

In Step 101, N virtual ONUs in a serial number state receive an SN request sent by an OLT; herein N is a natural number greater than or equal to 2.

In an embodiment, the ONU is in an initial state when being powered on. The ONU monitors a downstream frame sent by the OLT and acquires frame synchronization to enter a standby state.

In an embodiment, the OLT sends the downstream frame every 125 microseconds. When the ONU is just powered on, it cannot keep synchronization with the downstream frame temporarily, thus two alarms which are Signal/Loss of Frame (LOS/LOF) are generated. When the ONU receives the downstream frame and obtains the frame synchronization, the two alarms will be cleared.

In an embodiment, the ONU in a standby state receives a message of Upstream_overhead parameters sent by the OLT, or a message of Upstream_overhead parameters and a message of Extended_Burst_Length sent by the OLT, then performs upstream frame related configuration according to the parameters contained in the message, and enters the serial number state.

In an embodiment, the message of Upsteam_overhead parameters and the message of Extended_Burst_Length are transmitted by the OLT in a broadcast manner in the downstream direction through Physical Layer Operation, Administration &Maintenance (PLOAM) messages in the downstream frame. The upstream frame related configuration includes the number of guard bits, the number of preamble bits, and the number of delimiter bits.

In an embodiment, N virtual ONUs in a serial number state receive the SN request sent by the optical line terminal (OLT); herein N is a natural number greater than or equal to 2.

According to specifications in G.984.3 Standard of ITU-T, the SN request sent by the OLT to the ONU in a serial number state is transmitted through the downstream physical control block (PCBd) in the downstream frame in a manner of BWmap Allocation Structures. The downstream frame consists of two parts, i.e., PCBd and payload, where the PCBd consists of a Physical Synchronization (Psync) field, an identification (Ident) field, a PLOAM downstream (PLOAMd) field, a Bit Interleaved Parity (BIP) field, a Payload Length downstream (Plend) field, and an Upstream Bandwidth Mapping (US BWmap) field, where US BWmap field consists of M Allocation Structures. Each allocation structure consists of an allocation ID (Alloc-ID) field, a bandwidth allocation Flags field, a bandwidth Start Time field, a bandwidth Stop Time field, and a Cyclic Redundancy Check (CRC) field.

In Step 102, each virtual ONU sends an SN response to the OLT.

In an embodiment, each virtual ONU may send the SN response to the OLT after receiving the SN request sent by the OLT.

FIG. 2 is a flowchart of an implementation method for sending, by each virtual ONU, an SN response to the OLT in an embodiment of the present invention. As shown in FIG. 2, a method for sending, by each virtual ONU, the SN response to the OLT may include the following steps 102a and 102b.

In Step 102a, each virtual ONU calculates a sending time corresponding to each SN response.

In an embodiment, when each virtual ONU sends the SN response to the OLT, it may first calculate the sending time corresponding to each SN response. In an embodiment, each virtual ONU may calculate the sending time corresponding to each SN response according to the following formula: a sending time corresponding to the i-th SN response = a start time + a response time + a random delay + a preset time interval ^{∗} (i-1); herein i is a natural number greater than or equal to 1 and less than or equal to N.

In Step 102b, each virtual ONU sends the SN response to the OLT according to the sending time corresponding to each SN response.

In a practical application, each virtual ONU may send the SN response to the OLT according to the sending time corresponding to each SN response. In an embodiment, the corresponding relationship between the SN response and the sending time may be shown in the following Table 1:

**Table 1**

| SN response | Sending time |
|---|---|
| SN response 1 | Sending time 1 |
| SN response 2 | Sending time 2 |
| ... | ... |
| SN response N | Sending time N |

From the above analysis, it may be seen that through the above steps 102a∼102b, each virtual ONU may send the SN response to the OLT respectively after receiving the SN request sent by the OLT, so that the OLT may register each virtual ONU according to each SN response.

In Step 103, the OLT registers each virtual ONU according to each SN response.

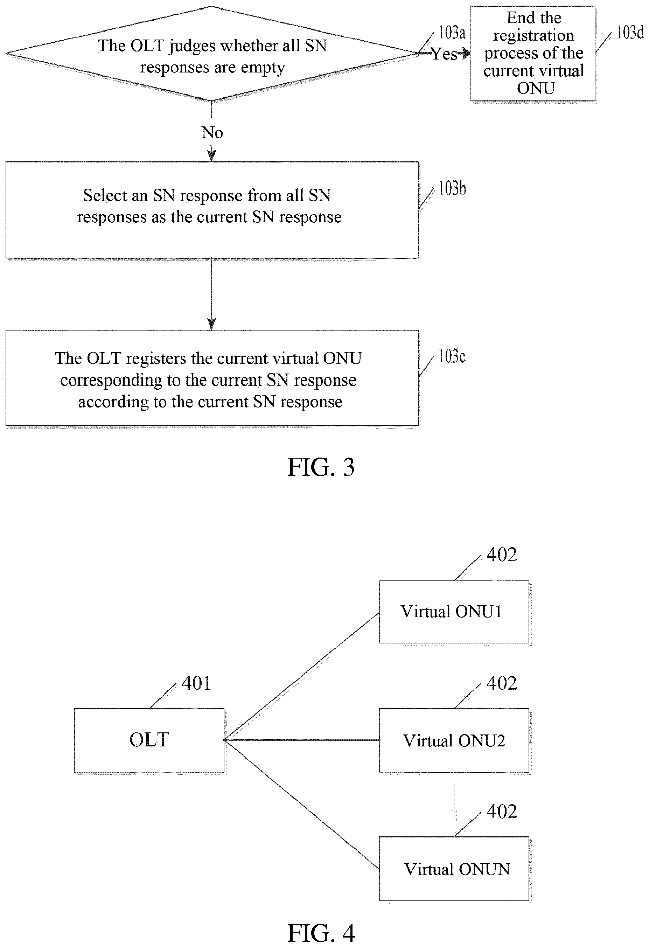

In a practical application, the OLT may register each virtual ONU according to each SN response after receiving the SN response sent by each virtual ONU. FIG. 3 is a flowchart of an implementation method for registering, by an OLT, each virtual ONU according to each SN response in the present invention. As shown in FIG. 3, the method for registering, by an OLT, each virtual ONU according to each SN response may include the following steps 103a-103d.

In Step 103a, the OLT judges whether all SN responses are empty; when all SN responses are not empty, step 103b is executed; when all SN responses are empty, step 103d is executed.

In a practical implementation, when the OLT registers each virtual ONU according to each SN response, the OLT may first judge whether all SN responses are empty; when all SN responses are not empty, step 103c is executed; when all SN responses are empty, step 103d is executed.

In Step 103b, the OLT selects an SN response from all SN responses as the current SN response.

In a practical implementation, when all SN responses are not empty, an SN response may be selected from all SN responses as the current SN response. In an embodiment, the OLT may randomly select an SN response from all SN responses as the current SN response.

In Step 103c, the OLT registers the current virtual ONU corresponding to the current SN response according to the current SN response.

In a practical implementation, after the OLT selects the current SN response from all SN responses, it may register the current virtual ONU corresponding to the current SN response according to the current SN response. In an embodiment, the OLT may judge whether the current virtual ONU is legal according to the current SN response. When the current virtual ONU is legal, the OLT sends a unique current ONU identification to the current virtual ONU; then the current virtual ONU enters a ranging state after receiving the current ONU identification; and enters a working state after receiving an equalization time delay sent by the OLT; and the registration of the current virtual ONU is activated successfully. When the current virtual ONU is illegal, the registration process of the current virtual ONU may be ended.

In an embodiment, the current virtual ONU in the ranging state may receive a Ranging Request sent by the OLT, and the current virtual ONU sends its own serial number information to the OLT after receiving the ranging request. In order to synchronize the upstream transmissions of all ONUs, the OLT needs to measure the equalization time delay of the current virtual ONU. After accomplishing the measurement of the equalization time delay of the current virtual ONU, the OLT sends the equalization time delay to the current virtual ONU, and the current virtual ONU enters the working state after successfully receiving the equalization time delay. The registration by the current virtual ONU is successful.

In Step 103d, the registration process of the current virtual ONU is ended.

In a practical implementation, when all SN responses are empty, the registration process of the current virtual ONU may be ended.

According to the registration method for the virtual ONU provided by an embodiment of the present invention, N virtual ONUs in a serial number state first receive the SN request sent by the OLT, then each virtual ONU sends the SN response to the OLT, and finally the OLT registers each virtual ONU according to each SN response. That is, the OLT may register multiple virtual ONUs according to the SN responses sent by the multiple virtual ONUs. However, in the existing art, when an ONU provides services for multiple user terminals, the multiple user terminals share a total bandwidth, the bandwidth sharing among users has a competitive relationship, and the user experience is poor. Therefore, compared with the existing art, with the registration method for the virtual ONU provided by the embodiment of the present invention, an ONU can provide independent bandwidth service and independent maintenance management for multiple user terminals simultaneously; the user terminals do not affect each other. In addition, the solution of an embodiment of the present invention is simple and convenient to realize, convenient to popularize and has a wide application range.

FIG. 4 is a diagram of a first composition structure of a registration system for a virtual ONU in an embodiment of the present invention. As shown in FIG. 4, the system includes an OLT 401 and N virtual ONUs 402.

The OLT 401 is configured to send an SN request to N virtual ONUs in an SN state; herein N is a natural number greater than or equal to 2.

The virtual ONU 402 is configured to send an SN response to the OLT.

The OLT 401 is further configured to register each virtual ONU according to each SN response.

In an embodiment, the virtual ONU 402 is configured to calculate a sending time corresponding to the SN response and send the SN response to the OLT according to the sending time corresponding to the SN response.

In an embodiment, the virtual ONU 402 is configured to calculate the sending time corresponding to the SN response according to the following formula:
a sending time corresponding to the i-th SN response = a start time + a response time + a random delay + a preset time interval ^{∗} (i-1); herein i is a natural number greater than or equal to 1 and less than or equal to N.

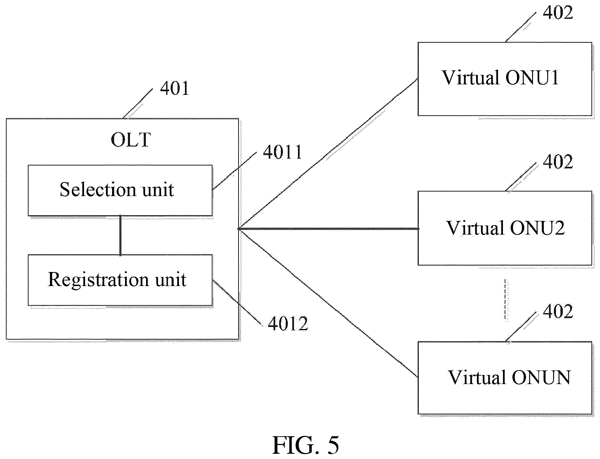

FIG. 5 is a diagram of a second composition structure of a registration system for a virtual ONU in an embodiment of the present invention. As shown in FIG. 5, the OLT 401 includes a selection unit 4011 and a registration unit 4012.

The selection unit 4011 is configured to select an SN response from all SN responses as a current SN response when all SN responses are not empty.

The registration unit 4012 is configured to register the current virtual ONU corresponding to the current SN response according to the current SN response.

In an embodiment, the registration unit 4012 is configured to judge whether the current virtual ONU is legal according to the current SN response; send a unique current ONU identification to the current virtual ONU when the current virtual ONU is legal; and send an equalization delay to a current virtual ONU in a ranging state.

Various units proposed in an embodiment of the present invention may be implemented by processors, and of course, they may also be implemented by specific logic circuits. In a practical application, the processor may be a Central Processing Unit (CPU), a microprocessor (MPU), or a Field Programmable Gate Array (FPGA), etc.

In an embodiment of the present invention, if the above registration method for the virtual ONU is implemented in a form of software function module and is sold or used as an independent product, the method may also be stored in a computer readable storage medium. Based on such understanding, the solution of an embodiment of the present invention substantially or the portions which make contributions to the existing art may be embodied in the form of software product, the computer software product is stored in a storage medium and includes multiple instructions which enable a computer device (which may be a personal computer, a server or a network device) to execute all or partial steps of the method provided by each embodiment of the present invention. The foresaid storage medium includes various mediums capable of storing program codes, such as a USB flash disk, a mobile hard disk, a Read Only Memory (ROM), a magnetic disk or a compact disk. Therefore, embodiments of the present invention are not limited to any specific combination of the hardware and software.

Correspondingly, an embodiment of the present invention further provides a computer storage medium, storing a computer program, herein, the computer program is used to execute the above register method for the virtual ONU in an embodiment of the present invention.

According to the registration system for the virtual ONU provided by an embodiment of the invention, N virtual ONUs in a serial number state first receive the SN request sent by an optical line terminal OLT, then each virtual ONU sends the SN response to the OLT, and finally the OLT registers each virtual ONU according to each SN response. That is, the OLT may register multiple virtual ONUs according to SN responses sent by the multiple virtual ONUs. However, in the existing art, when an ONU provides services for multiple user terminals, the multiple user terminals share a total bandwidth, the bandwidth sharing among users has a competitive relationship, and the user experience is poor. Therefore, compared with the existing art, with the registration method and system for the virtual ONU provided by embodiments of the invention, an ONU can provide independent bandwidth service and independent maintenance management for multiple user terminals simultaneously; the user terminals do not affect each other. In addition, the solution of an embodiment of the present invention is simple and convenient to realize, convenient to popularize and has a wide application range.

The skilled in the art should understand that, an embodiment of the present invention can be provided as a method, a system or a computer program product. Therefore, the present invention may be in a form of a hardware embodiment, a form of a software embodiment or a form of an embodiment combining the software aspect and the hardware aspect. Moreover, the present invention may be in a form of a computer program product implemented on one or more computer available memory mediums (including but not limited to a disk memory, an optical memory and so on) which contain computer available program codes.

The present invention is described according to a flowchart and/or block diagram of the method, device (system) and computer program product of the embodiments of the present invention. It should be understood that each flow and/or block in the flowchart and/or block diagram and a combination of flow and/or block in the flowchart and/or block diagram can be implemented by computer program instructions. These computer program instructions can be provided to a general-purpose computer, a special-purpose computer, an embedded processor or processors of other programmable data processing devices to generate a machine, which makes the instructions executed by the computer or processors of other programmable data processing devices generate a device used for implementing functions specified in one or more flows of the flowchart and/or in one or more blocks of the block diagram.

These computer program instructions also can be stored in computer readable memory which can guide the computer or other programmable data processing devices to work in a specific way, which makes the instructions stored in the computer readable memory generate articles including an instruction device, and the instruction device implements functions specified in one or more flows of the flowchart and/or in one or more blocks of the block diagram.

These computer program instructions also can be loaded on a computer or other programmable data processing devices, which causes a series of operation steps to be executed on the computer or other programmable devices to generate processing implemented by the computer, thus, the instructions executed by the computer or other programmable devices provide the steps used for implementing functions specified in one or more flows of the flowchart and/or in one or more blocks of the block diagram.

The embodiments described above are just preferred embodiments of the present invention and are not used for limiting the protection scope of the present invention.

## Claims

1. A registration method for a virtual optical network unit, ONU, comprising:
receiving, by N virtual ONUs in a serial number, SN, state, an SN request sent by an optical line terminal, OLT; wherein N is a natural number greater than or equal to 2 (101);
sending, by each virtual ONU, an SN response to the OLT (102) to enable the OLT to register each virtual ONU according to each SN response (103);
wherein sending, by each virtual ONU, the SN response to the OLT (102), comprises:
calculating, by each virtual ONU, a sending time corresponding to each SN response (102a);
sending, by each virtual ONU, the SN response to the OLT according to the sending time corresponding to each SN response (102b);
wherein each virtual ONU calculates the sending time corresponding to each SN response according to the following formula:
a sending time corresponding to an i-th SN response = a start time + a response time + a random delay + a preset time interval × i; wherein i is a natural number greater than or equal to 0 and less than or equal to N-1.

2. The method of claim 1, wherein registering, by the OLT, each virtual ONU according to each SN response (103), comprises:
selecting an SN response from all SN responses as a current SN response when all SN responses are not empty (103b);
registering, by the OLT, a current virtual ONU corresponding to the current SN response according to the current SN response (103c).

3. The method of claim 2, wherein registering, by the OLT, the current virtual ONU corresponding to the current SN response according to the current SN response (103c), comprises:
judging, by the OLT, whether the current virtual ONU is legal according to the current SN response;
sending, by the OLT, a unique current ONU identification to the current virtual ONU when the current virtual ONU is legal;
entering, by the current virtual ONU, a ranging state after receiving the current ONU identification; and entering a working state after receiving an equalization delay sent by the OLT; wherein the registration of the current virtual ONU is activated successfully.

4. A registration system for a virtual optical network unit, ONU (402), comprising: an optical line terminal, OLT (401), and N virtual ONUs (402); wherein,
the OLT (401) is configured to send a serial number, SN, request to the N virtual ONUs (402) in an SN state; wherein N is a natural number greater than or equal to 2
the virtual ONU (402) is configured to send an SN response to the OLT (401);
the OLT (401) is further configured to register each virtual ONU (402) according to each SN response; wherein the virtual ONU (402) is further configured to calculate a sending time corresponding to the SN response and send the SN response to the OLT (401) according to the sending time corresponding to the SN response;
wherein the virtual ONU (402) is further configured to calculate the sending time corresponding to the SN response according to the following formula:
a sending time corresponding to an i-th SN response = a start time + a response time + a random delay + a preset time interval × i; wherein i is a natural number greater than or equal to 0 and less than or equal to N-1.

5. The system according to claim 4, wherein the OLT (401) further comprises: a selection unit (4011) and a registration unit (4012), wherein
the selection unit (4011) is configured to select an SN response from all SN responses as a current SN response when all SN responses are not empty;
the registration unit (4012) is configured to register the current virtual ONU (402) corresponding to the current SN response according to the current SN response.

6. The system of claim 5, wherein the registration unit (4012) is further configured to judge whether the current virtual ONU (402) is legal according to the current SN response; send a unique current ONU identification to the current virtual ONU (402) when the current virtual ONU (402) is legal; and send an equalization delay to a current virtual ONU (402) in a ranging state.

7. A computer storage medium storing computer executable instructions which are used for executing the registration method for a virtual optical network unit, ONU, according to any one of claims 1-3.

## Patentansprüche

1. Registrierungsverfahren für eine virtuelle optische Netzwerkeinheit (ONU, Optical Network Unit), das Folgendes umfasst:
durch N virtuelle ONUs in einem Seriennummer-(SN)-Zustand, Empfangen einer SN-Anforderung, die von einem optischen Leitungsendgerät (OLT, Optical Line Terminal) gesendet wird; wobei N eine natürliche Zahl größer oder gleich 2 ist (101);
durch jede virtuelle ONU, Senden einer SN-Antwort an das OLT (102), um es dem OLT zu ermöglichen, jede virtuelle ONU gemäß jeder SN-Antwort zu registrieren (103);
wobei das Senden der SN-Antwort durch jede virtuelle ONU an das OLT (102) Folgendes umfasst:
durch jede virtuelle ONU, Berechnen einer jeder SN-Antwort entsprechenden Sendezeit (102a);
durch jede virtuelle ONU, Senden der SN-Antwort an das OLT gemäß der jeder SN-Antwort entsprechenden Sendezeit (102b);
wobei jede virtuelle ONU die jeder SN-Antwort entsprechende Sendezeit gemäß der folgenden Formel berechnet:
eine Sendezeit, die einer i-ten SN-Antwort entspricht = eine Startzeit + eine Antwortzeit + eine zufällige Verzögerung + ein voreingestelltes Zeitintervall × i; wobei i eine natürliche Zahl größer oder gleich 0 und kleiner oder gleich N-1 ist.

2. Verfahren nach Anspruch 1, wobei das Registrieren jeder virtuellen ONU gemäß jeder SN-Antwort durch das OLT Folgendes umfasst:
Auswählen einer SN-Antwort aus allen SN-Antworten als aktuelle SN-Antwort, wenn alle SN-Antworten nicht leer sind (103b);
durch das OLT, Registrieren einer der aktuellen SN-Antwort entsprechenden aktuellen virtuellen ONU gemäß der aktuellen SN-Antwort (103c).

3. Verfahren nach Anspruch 2, wobei das Registrieren der der aktuellen SN-Antwort entsprechenden aktuellen virtuellen ONU gemäß der aktuellen SN-Antwort durch das OLT (103c) Folgendes umfasst:
Beurteilen durch das OLT, ob die aktuelle virtuelle ONU gemäß der aktuellen SN-Antwort zulässig ist;
Senden einer eindeutigen Identifikation der aktuellen ONU durch das OLT an die aktuelle virtuelle ONU, wenn die aktuelle virtuelle ONU zulässig ist;
Eintreten der aktuellen virtuellen ONU in einen Ranging-Zustand nach dem Empfangen der eindeutigen Identifikation der aktuellen ONU; und Eintreten in einen Arbeitszustand nach dem Empfangen einer von dem OLT gesendeten Ausgleichsverzögerung; wobei die Registrierung der aktuellen virtuellen ONU erfolgreich aktiviert wird.

4. Registrierungssystem für eine virtuelle optische Netzwerkeinheit (ONU, Optical Network Unit) (402), die Folgendes umfasst: ein optisches Leitungsendgerät (OLT, Optical Line Terminal) (401) und N virtuelle ONUs; wobei
das OLT (401) konfiguriert ist, um eine Seriennummer-(SN)-Anforderung an die N virtuellen ONUs (402) in einem SN-Zustand zu senden; wobei N eine natürliche Zahl größer oder gleich 2 ist;
die virtuelle ONU (402) konfiguriert ist, um eine SN-Antwort an das OLT (401) zu senden;
das OLT (401) ferner konfiguriert ist, um jede virtuelle ONU (402) gemäß jeder SN-Antwort zu registrieren;
wobei die virtuelle ONU (402) ferner konfiguriert ist zum Berechnen der der SN-Antwort entsprechenden Sendezeit und zum Senden der SN-Antwort an das OLT (401) gemäß der der SN-Antwort entsprechenden Sendezeit;
wobei die virtuelle ONU (402) ferner konfiguriert ist, um die der SN-Antwort entsprechende Sendezeit gemäß der folgenden Formel zu berechnen:
eine Sendezeit, die einer i-ten SN-Antwort entspricht = eine Startzeit + eine Antwortzeit + eine zufällige Verzögerung + ein voreingestelltes Zeitintervall × i; wobei i eine natürliche Zahl größer oder gleich 0 und kleiner oder gleich N-1 ist.

5. System nach Anspruch 4, wobei das OLT (401) ferner Folgendes umfasst: eine Auswahleinheit (4011) und eine Registrierungseinheit (4012), wobei
die Auswahleinheit (4011) konfiguriert ist zum Auswählen einer SN-Antwort aus allen SN-Antworten als aktuelle SN-Antwort, wenn alle SN-Antworten nicht leer sind;
die Registrierungseinheit (4012) konfiguriert ist zum Registrieren der der aktuellen SN-Antwort entsprechenden aktuellen virtuellen ONU (402) gemäß der aktuellen SN-Antwort.

6. System nach Anspruch 5, wobei die Registrierungseinheit (4012) ferner konfiguriert ist zum Beurteilen, ob die aktuelle virtuelle ONU (402) gemäß der aktuellen SN-Antwort zulässig ist; zum Senden einer eindeutigen Identifikation der aktuellen ONU an die aktuelle virtuelle ONU (402), wenn die aktuelle virtuelle ONU (402) zulässig ist; und zum Senden einer Ausgleichsverzögerung an eine aktuelle virtuelle ONU (402) in einem Ranging-Zustand.

7. Computerspeichermedium, in dem computerausführbare Anweisungen gespeichert sind, die zum Ausführen des Registrierungsverfahrens für eine virtuelle optische Netzwerkeinheit (ONU, Optical Network Unit) nach einem der Ansprüche 1 bis 3 verwendet werden.

## Revendications

1. Procédé d'enregistrement pour unité de réseau optique (ONU, optical network unit) virtuelle, comprenant :
la réception, par N ONU virtuelles dans un état de numéro de série (SN, serial number), d'une demande de SN envoyée par un terminal de ligne optique (OLT, optical line terminal) ; N étant un nombre naturel supérieur ou égal à 2 (101) ;
l'envoi, par chaque ONU virtuelle, d'une réponse SN auprès de l'OLT (102) permettant à l'OLT d'enregistrer chaque ONU virtuelle conformément à chaque réponse SN (103) ;
ledit envoi, par chaque ONU virtuelle, de la réponse SN auprès de l'OLT (102) comprenant :
le calcul, par chaque ONU virtuelle, d'un temps d'envoi correspondant à chaque réponse SN (102a);
l'envoi, par chaque ONU virtuelle, de la réponse SN auprès de l'OLT conformément au temps d'envoi correspondant à chaque réponse SN (102b) ;
chaque ONU virtuelle calculant le temps d'envoi correspondant à chaque réponse SN conformément à la formule suivante :
le temps d'envoi correspondant à une i-ème réponse SN = le temps de départ + le temps de réponse + un retard aléatoire + un intervalle de temps prédéfini × i ; i étant un nombre naturel supérieur ou égal à 0 et inférieur ou égal à N-1.

2. Procédé selon la revendication 1, dans lequel l'enregistrement, par l'OLT, de chaque ONU virtuelle conformément à chaque réponse SN, comprend :
la sélection d'une réponse SN parmi toutes les réponses SN comme réponse SN courante lorsqu'aucune des réponses SN n'est vide (103b) ;
l'enregistrement, par l'OLT, d'une ONU virtuelle courante correspondant à la réponse SN courante conformément à la réponse SN courante (103c).

3. Procédé selon la revendication 2, dans lequel l'enregistrement, par l'OLT, de l'ONU virtuelle courante correspondant à la réponse SN courante conformément à la réponse SN courante (103c), comprend :
la détermination, par l'OLT, du fait ou non que l'ONU virtuelle courante est légale conformément à la réponse SN courante ;
l'envoi, par l'OLT, d'une identification unique d'ONU courante auprès de l'ONU virtuelle courante lorsque l'ONU virtuelle courante est légale ;
l'entrée, par l'ONU virtuelle courante, dans un état de télémétrie après la réception de l'identification unique d'ONU courante ; et l'entrée dans un état de travail après la réception d'un retard d'égalisation envoyé par l'OLT ; l'enregistrement de l'ONU virtuelle courante étant activé avec succès.

4. Système d'enregistrement pour une unité de réseau optique (ONU, optical network unit) virtuelle (402), comprenant : un terminal de ligne optique (OLT, optical line terminal) (401) et N ONU virtuelles ; et dans lequel
l'OLT (401) est conçu pour envoyer une demande de numéro de série (SN, serial number) auprès des N ONU virtuelles (402) dans un état SN ; N étant un nombre naturel supérieur ou égal à 2 ; l'ONU virtuelle (402) est conçue pour envoyer une réponse SN auprès de l'OLT (401) ;
l'OLT (401) est conçu en outre pour enregistrer chaque ONU virtuelle (402) conformément à chaque réponse SN ;
ladite ONU virtuelle (402) étant conçue en outre pour calculer le temps d'envoi correspondant à la réponse SN et pour envoyer la réponse SN auprès de l'OLT (401) conformément au temps d'envoi correspondant à la réponse SN ;
ladite ONU virtuelle (402) étant conçue en outre pour calculer le temps d'envoi correspondant à la réponse SN conformément à la formule suivante :
le temps d'envoi correspondant à une i-ème réponse SN = le temps de départ + le temps de réponse + un retard aléatoire + un intervalle de temps prédéfini × i ; i étant un nombre naturel supérieur ou égal à 0 et inférieur ou égal à N-1.

5. Système selon la revendication 4, dans lequel l'OLT (401) comprend en outre : une unité de sélection (4011) et une unité d'enregistrement (4012), étant entendu que :
l'unité de sélection (4011) est conçue pour sélectionner une réponse SN parmi toutes les réponses SN comme réponse SN courante lorsqu'aucune des réponses SN n'est vide,
l'unité d'enregistrement (4012) est conçue pour enregistrer l'ONU virtuelle courante (402) correspondant à la réponse SN courante conformément à la réponse SN courante.

6. Système selon la revendication 5, dans lequel l'unité d'enregistrement (4012) est conçue en outre pour déterminer si l'ONU virtuelle courante (402) est légale ou non conformément à la réponse SN courante, pour envoyer une identification unique d'ONU courante auprès de l'ONU virtuelle courante (402) lorsque l'ONU virtuelle courante (402) est légale, et pour envoyer un retard d'égalisation à une ONU virtuelle courante (402) dans un état de télémétrie.

7. Support d'enregistrement informatique sur lequel sont stockées des instructions exécutables par voie informatique, lesquelles permettent d'exécuter le procédé d'enregistrement pour unité de réseau optique (ONU, optical network unit) virtuelle selon l'une quelconque des revendications 1 à 3.
